# EUROPEAN PATENT SPECIFICATION

(11) **EP 4 325 539 B1**
(45) Date of publication and mention of the grant of the patent: **31.12.2025**
(21) Application number: 22824669.0
(22) Date of filing: 15.04.2022
(51) Int. Cl.: H01G 11/12, H01G 11/18, H01G 11/74, H01G 11/80, H01M 10/0585, H01M 10/613, H01M 10/625, H01M 10/6556, H01M 50/184, H01M 50/186, H01M 50/569, H01M 10/48

(54) **POWER STORAGE DEVICE**
ENERGIESPEICHERVORRICHTUNG
DISPOSITIF DE STOCKAGE D'ÉNERGIE

(30) Priority: 14.06.2021 JP 2021098706
(43) Date of publication of application: 21.02.2024
(73) Proprietor: KABUSHIKI KAISHA TOYOTA JIDOSHOKKI, Kariya-shi, Aichi 448-8671 (JP)
(72) Inventor: KONDO, Yushi, Kariya-shi, Aichi 448-8671 (JP)
(74) Representative: TBK
(86) International application number: PCT/JP2022/017907
(87) International publication number: WO 2022/264674

(56) References cited:
- EP-A2- 1 487 034
- EP-B1- 3 028 335
- JP-A- 2005 071 784
- JP-A- 2018 519 646
- JP-A- 2019 197 670
- JP-A- 2020 161 338
- JP-A- 2020 161 338
- JP-A- 2021 012 755

## Description

### Technical Field

The present disclosure relates to a power storage device.

### Background Art

Patent Literature 1 discloses a bipolar battery. The bipolar battery has the following configuration. A bipolar electrode in which a positive electrode layer is formed on one surface of a current collector and a negative electrode layer is formed on the other surface is stacked through an electrolyte layer holding an electrolyte by a separator, and a plurality of sheets of the bipolar electrodes are arranged in series. A single cell layer is constituted by the stacked structure in which the electrolyte layer is interposed between the positive electrode layer and the negative electrode layer, and a plurality of the single cell layers are further stacked to form a battery element. The entirety of the periphery of the battery element is covered with a resin group that maintains air-tightness of the battery element. Then, a voltage detection tab configured to detect an inter-terminal voltage of each single cell layer is provided in each current collector, and the voltage detection tab is exposed to the outside of the resin group.

### Citation List

### Patent Literature

Patent Literature 1: Japanese Unexamined Patent Publication No. 2005-5163

### Summary of Invention

### Technical Problem

By the way, in the above-described bipolar battery, a detection line called the voltage detection tab is led out from the inside of the battery element to the outside through a sealing material. In this case, there is a concern that a leading-out position of the detection line in the sealing material is more likely to be cleaved when an internal pressure of the single cell layer rises in comparison to other sites of the sealing material. When the leading-out position of the detection line in the sealing material is cleaved, for example, there is a concern that external detection lines may be short-circuited through an electrolytic solution, and this leads to lowering of reliability.

An object of the present disclosure is to provide a power storage device capable of suppressing lowering of reliability.

### Solution to Problem

A power storage device according to the present disclosure includes: a stacked body constituted by stacking a plurality of electrodes including a current collector and an active material layer provided on the current collector; a sealing portion surrounding the stacked body and configured to seal between the electrodes adjacent in a stacking direction of the stacked body; a plurality of detection lines which are connected to the electrodes and are led out from the sealing portion to the outside; and a cooling member contacting with the stacked body and includes a cooling flow passage through which a cooling fluid is allowed to circulate from an inlet port to an outlet port in a direction intersecting the stacking direction. The sealing portion includes a leading-out portion through which each of the plurality of detection lines is led out, and the leading-out portion is located to be closer to the inlet port in relation to the outlet port of the cooling flow passage when viewed from the stacking direction.

In the power storage device, with respect to the stacked body of the electrodes, the sealing portion that seals between the electrodes adjacent in the stacking direction is provided, and the sealing portion is provided with the leading-out portion through which the plurality of detection lines are led out to the outside of the stacked body. In addition, the power storage device is provided with the cooling member including the cooling flow passage through which the cooling fluid is allowed to circulate in a direction intersecting the stacking direction. In addition, the leading-out portion for the detection lines in the sealing portion is located to be closer to the inlet port in relation to the outlet port of the cooling flow passage. In the cooling flow passage, a temperature of the cooling fluid is lower on the inlet port side in comparison to the outlet port side, and thus cooling efficiency is high. Accordingly, even in a case where a temperature inside the stacked body rises due to a certain reason, the temperature of the leading-out portion closer to the inlet port of the cooling flow passage is less likely to be raised in comparison to other sites of the sealing portion. Accordingly, the sealing portion is suppressed from being softened due to temperature rising of the sealing portion in the leading-out portion. In addition, even at the inside of the stacked body, a temperature of an electrode at a portion closer to the inlet port of the cooling flow passage is maintained to be relatively lower in comparison to electrodes at other portions. Accordingly, at the inside of the stacked body, a gas is less likely to be generated at a portion close to the inlet port of the cooling flow passage, and thus a pressure is less likely to be applied to the sealing portion at the leading-out portion. Accordingly, at the leading-out portion, cleavage of the sealing portion is less likely to occur when an internal pressure rises, and lowering of reliability is suppressed.

In the power storage device according to the present disclosure, the sealing portion may include a plurality of outer side surfaces extending along the stacking direction, the plurality of outer side surfaces may include a first outer side surface on the inlet port side, a second outer side surface on the outlet port side as an outer side surface different from the first outer side surface, and a third outer side surface extends between the first outer side surface and the second outer side surface, and the leading-out portion may be provided in the third outer side surface and may be located to be closer to the inlet port in relation to the outlet port when viewed from the stacking direction.

In the power storage device according to the present disclosure, the sealing portion may include a plurality of outer side surfaces extending along the stacking direction, the plurality of outer side surfaces may include a first outer side surface on the inlet port side, and a second outer side surface on the outlet port side as an outer side surface different from the first outer side surface, and the leading-out portion may be provided in the first outer side surface.

In the power storage device according to the present disclosure, the inlet port and the outlet port may be disposed on the same side of the cooling member, the sealing portion may include a plurality of outer side surfaces extending along the stacking direction, the plurality of outer side surfaces may include a first outer side surface on the side of the inlet port and the outlet port, and the leading-out portion may be provided in the first outer side surface, and may be located to be closer to the inlet port in relation to the outlet port when viewed from the stacking direction.

In the power storage device according to the present disclosure, the sealing portion may include a plurality of outer side surfaces extending along the stacking direction, the leading-out portion may be disposed in at least one outer side surface among the plurality of outer side surfaces, and leading-out portions adjacent in the stacking direction among a plurality of the leading-out portions may be disposed at different positions in a direction intersecting the stacking direction and an extending direction of the detection lines. In this case, it is possible to avoid accumulation of the thickness of the detection lines along the stacking direction.

In the power storage device according to the present disclosure, the cooling member may have a configuration in which the cooling flow passage is formed inside a conductive plate member, and may come into contact with the outermost electrode in the stacking direction of the stacked body to be electrically connected to the outermost electrode. In this case, since the conductive cooling member is disposed in contact with the outermost electrode of the stacked body, the cooling member can be used as a conductive plate.

In the power storage device according to the present disclosure, the sealing portion may be provided in a peripheral edge portion of the current collector when viewed from the stacking direction, and the cooling member may extend over the peripheral edge portion of the current collector to overlap the sealing portion when viewed from the stacking direction. In this case, the sealing portion is cooled down and temperature rising is suppressed.

### Advantageous Effects of Invention

According to the present disclosure, a power storage device capable of suppressing lowering of reliability can be provided.

### Brief Description of Drawings

FIG. 1 is a schematic cross-sectional view of a power storage device according to an embodiment.
FIG. 2 is a schematic plan view of the power storage device illustrated in FIG. 1.
FIG. 3 is a schematic side view of the power storage device illustrated in FIG. 1.
FIG. 4 is a schematic plan view illustrating a power storage device according to a modification example.
FIG. 5 is a schematic plan view illustrating a power storage device according to a modification example.

### Description of Embodiments

Hereinafter, an embodiment of the present disclosure will be described in detail with reference to the accompanying drawings. Note that, in description of the drawings, the same reference numeral will be given to the same element or the equivalent element, and redundant description may be omitted. In addition, in each of the drawings, an orthogonal coordinate system defined by an X-axis, a Y-axis, and a Z-axis may be shown.

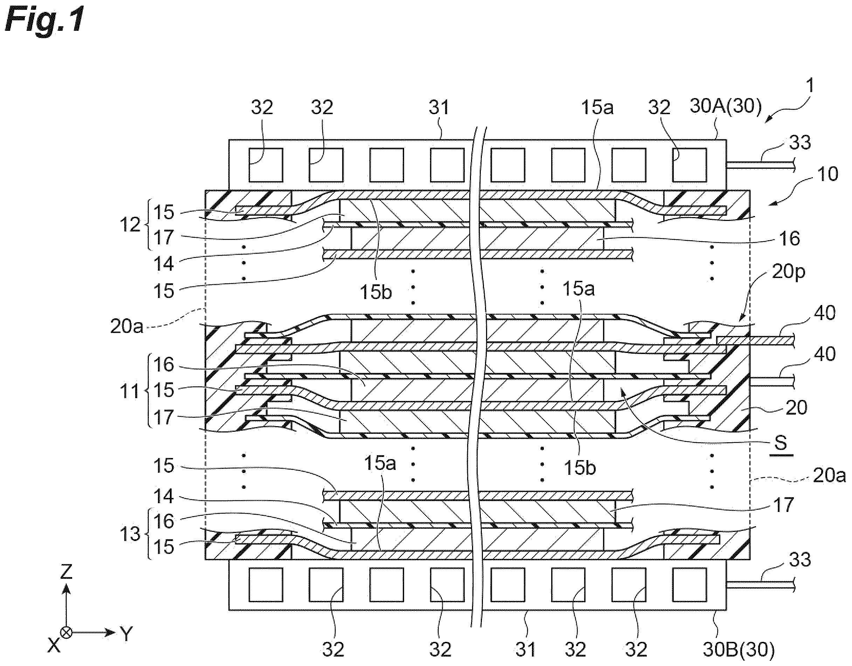

FIG. 1 is a schematic cross-sectional view of a power storage device according to an embodiment. A power storage device 1 illustrated in FIG. 1 is, for example, a power storage module that is used in batteries of various kinds of vehicles such as a forklift, a hybrid car, and an electric vehicle. For example, the power storage device 1 is a secondary battery such as a nickel-hydrogen secondary battery and a lithium ion secondary battery. The power storage device 1 may be an electric double layer capacitor, or a solid-state battery. In this embodiment, a case where the power storage device 1 is the lithium ion secondary battery is exemplified.

The power storage device 1 includes an electrode stacked body (stacked body) 10, a sealing portion 20, a pair of cooling members 30, and a plurality of detection lines 40. The electrode stacked body 10 includes a plurality of bipolar electrodes (electrodes) 11, a negative termination electrode (electrode) 12, a positive termination electrode (electrode) 13, and a plurality of separators 14.

The bipolar electrode 11 includes a current collector 15, a positive electrode active material layer (active material layer) 16, and a negative electrode active material layer (active material layer) 17. The current collector 15 has, for example, a sheet shape. The current collector 15 has, for example, a rectangular shape when viewed from the Z-axis direction. The positive electrode active material layer 16 is provided on one surface 15a of the current collector 15. The positive electrode active material layer 16 has, for example, a rectangular shape when viewed from the Z-axis direction. The negative electrode active material layer 17 is provided on the other surface 15b of the current collector 15. The negative electrode active material layer 17 has, for example, a rectangular shape when viewed from the Z-axis direction.

The negative electrode active material layer 17 is larger than the positive electrode active material layer 16 by one turn when viewed from the Z-axis direction. That is, in this plan view when viewed from the Z-axis direction, the entirety of a formation region of the positive electrode active material layer 16 is located within the formation region of the negative electrode active material layer 17. The plurality of bipolar electrodes **11** are stacked along the Z-axis direction so that the positive electrode active material layer 16 and the negative electrode active material layer 17 face each other.

The negative termination electrode 12 includes the current collector 15 and the negative electrode active material layer 17. The negative termination electrode 12 does not include the positive electrode active material layer 16. That is, the active material layer is not provided on the one surface 15a of the current collector 15 of the negative termination electrode 12. The one surface 15a of the current collector 15 of the negative termination electrode 12 is exposed. The negative termination electrode 12 is disposed on one side of the plurality of bipolar electrodes 11 in the Z-axis direction. The negative electrode active material layer 17 of the negative termination electrode 12 faces the positive electrode active material layer 16 of one bipolar electrode 11 located at one end in the Z-axis direction.

The positive termination electrode 13 includes the current collector 15 and the positive electrode active material layer 16. The positive termination electrode 13 does not include the negative electrode active material layer 17. That is, the active material layer is not provided on the other surface 15b of the current collector 15 of the positive termination electrode 13. The other surface 15b of the current collector 15 of the positive termination electrode 13 is exposed. The positive termination electrode 13 is disposed on the other side of the plurality of bipolar electrodes 11 in the Z-axis direction. The positive electrode active material layer 16 of the positive termination electrode 13 faces the negative electrode active material layer 17 of one bipolar electrode 11 located at the other end in the Z-axis direction.

The separator 14 is disposed between the bipolar electrodes 11 adjacent to each other, between the negative termination electrode 12 and one of the bipolar electrodes 11, and between the positive termination electrode 13 and one of the bipolar electrodes 11. The separator 14 is interposed between the positive electrode active material layer 16 and the negative electrode active material layer 17. The separator 14 isolates the positive electrode active material layer 16 and the negative electrode active material layer 17 from each other and allows a charge carrier such as lithium ions to pass therethrough while preventing short-circuiting due to contact of adjacent electrodes. In this manner, the electrode stacked body 10 has a configuration in which a plurality of electrodes (the bipolar electrodes 11, the negative termination electrode 12, and the positive termination electrode 13) are stacked through the separator 14. Here, the Z-axis direction is a stacking direction of the electrodes in the electrode stacked body 10.

The current collector 15 is a chemically inactive electrical conductor for causing a current to continuously flow to the positive electrode active material layer 16 and the negative electrode active material layer 17 during discharging or charging of the lithium ion secondary battery. Examples of a material of the current collector 15 include a metallic material, a conductive resin material, and a conductive inorganic material. Examples of the conductive resin material include a resin obtained by adding a conductive filler to a conductive polymeric material or a non-conductive polymeric material as necessary. The current collector 15 may include a plurality of layers. In this case, each layer of the current collector 15 may contain the above-described metallic material or conductive resin material.

A coating layer may be formed on a surface of the current collector 15. The coating layer may be formed, for example, by a known method such as a plating treatment and spray coating. For example, the current collector 15 may have a plate shape, a foil shape (for example, metal foil), a film shape, a mesh shape, or the like. Examples of the metal foil include aluminum foil, copper foil, nickel foil, titanium foil, and stainless steel foil. Examples of the stainless steel foil include SUS304, SUS316, and SUS301 which are defined by JIS G 4305:2015. When using the stainless steel foil as the current collector 15, mechanical strength of the current collector 15 can be secured. The current collector 15 may be alloy foil of the metals, or clad foil. In a case where the current collector 15 has the foil shape, the thickness of the current collector 15 may be, for example, 1 µm to 100 µm.

The positive electrode active material layer 16 contains a positive electrode active material capable of occluding and discharging a charge carrier such as lithium ions. Examples of the positive electrode active material include a lithium composite metal oxide having a layered rock-salt structure, a metal oxide having a spinel structure, and a polyanion-based compound The positive electrode active material may be an active material that can be used in the lithium ion secondary battery. The positive electrode active material layer 16 may contain a plurality of positive electrode active materials. In this embodiment, the positive electrode active material layer 16 contains olivine type lithium iron phosphate (LiFePO₄) as a composite oxide.

The negative electrode active material layer 17 contains a negative electrode active material capable of occluding and discharging a charge carrier such as lithium ions. The negative electrode active material may be any of an elementary substance, an alloy, and a compound. Examples of the negative electrode active material include Li, carbon, and a metal compound. The negative electrode active material may be an element capable of being alloyed with lithium, a compound thereof, or the like. Examples of carbon include natural graphite, artificial graphite, hard carbon (hardly graphitizable carbon), and soft carbon (easily graphitizable carbon). Examples of the artificial graphite include high orientation graphite, and mesocarbon microbeads. Examples of the element capable of being alloyed with lithium include silicon, and tin. In this embodiment, the negative electrode active material layer 17 contains graphite as a carbon-based material.

Each of the positive electrode active material layer 16 and the negative electrode active material layer 17 (hereinafter, simply referred to as "active material layer") may further contain a conductive auxiliary agent, a binding agent, and an electrolyte (a polymer matrix, an ion conductive polymer, an electrolytic solution, or the like) for increasing electrical conductivity, an electrolyte support salt (lithium salt) for increasing ion conductivity, and the like as necessary. The conductive auxiliary agent is added to increase conductivity of each electrode. Examples of the conductive auxiliary agent include acetylene black, carbon black, and graphite.

A component contained in the active material layer, a blending ratio of the component, and the thickness of the active material layer are not particularly limited, and can appropriately refer to known findings relating to the lithium ion secondary battery. For example, the thickness of the active material layer is 2 to 150 µm. The active material layer may be formed on the surface of the current collector 15 by a known method such as a roll coating method. A heat-resistant layer may be provided on the surface (one surface or both surfaces) of the current collector 15 or the surface of the active material layer so as to improve thermal stability of each electrode. For example, the heat-resistant layer includes inorganic particles and a binding agent, and may contain other additives such as a thickening agent.

Examples of the binding agent include fluorine-containing resins such as polyvinylidene fluoride, polytetrafluoroethylene, and fluororubber, thermoplastic resins such as polypropylene and polyethylene, imide-based resins such as polyimide and polyamideimide, alkoxysilyl group-containing resins, acrylic resins such as acrylic acid or methacrylic acid, alginates such as styrene-butadiene rubber (SBR), carboxymethylcellulose, sodium alginate, and ammonium alginate, a water-soluble cellulose ester crosslinked product, and a starch-acrylic acid graft polymer. The binding agents can be used alone or in combination. As a solvent, for example, water, N-methyl-2-pyrrolidone (NMP), or the like is used.

The separator 14 may be, for example, a porous seat or non-woven fabric containing a polymer that absorbs and retains an electrolyte. Examples of a material of the separator 14 include polypropylene, polyethylene, polyolefin, and polyester. The separator 14 may have a single-layer structure or a multi-layer structure. For example, the multi-layer structure may include an adhesive layer, or a ceramic layer as a heat-resistant layer. The separator 14 may be impregnated with an electrolyte. The separator 14 may be constituted by an electrolyte such as a polymer electrolyte and an inorganic electrolytic. Examples of the electrolyte impregnated in the separator 14 include a liquid electrolyte (electrolytic solution) including a non-aqueous solvent and an electrolyte salt dissolved in the non-aqueous solvent, and a polymer gel electrolyte including an electrolyte retained in a polymer matrix.

In a case where the separator 14 is impregnated with the electrolytic solution, as an electrolyte salt thereof, a known lithium salt such as LiClO₄, LiAsF₆, LiPF₆, LiBF₄, LiCF₃SO₃, LiN(FSO₂)₂, and LiN(CF₃SO₂)₂ may be used. In addition, as the non-aqueous solvent, a known solvent such as cyclic carbonates, cyclic esters, chain carbonates, chain esters, and ethers may be used. Note that, two or more kinds of the known solvent materials may be used in combination.

The sealing portion 20 is formed at a peripheral edge portion of the electrode stacked body 10. The sealing portion 20 is joined to at least one of the one surface 15a and the other surface 15b of each of the current collectors 15 at the peripheral edge portion of the current collector 15. In this embodiment, the sealing portion 20 may be joined to both the one surface 15a and the other surface 15b of the current collector 15. The peripheral edge portion of the current collector 15 is embedded in the sealing portion 20. The sealing portion 20 surrounds the electrode stacked body 10 when viewed from the Z-axis direction and seals an accommodation space S between the electrodes. An electrolytic solution is accommodated in the accommodation space S. The sealing portion 20 prevents permeation of the electrolytic solution to the outside. The sealing portion 20 prevents intrusion of moisture and the like into the accommodation space S from the outside of the power storage device 1. For example, the sealing portion 20 prevents a gas generated in each electrode due to a charging and discharging reaction from being permeated to the outside of the power storage device 1. An edge portion of each of the separators 14 may be embedded in the sealing portion 20.

The sealing portion 20 contains an insulating material. The sealing portion 20 prevents short-circuiting between the electrodes by insulating between the electrodes. Examples of a material of the sealing portion 20 include various resin materials such as polyethylene, polystyrene, an ABS resin, a modified polypropylene, and an AS resin.

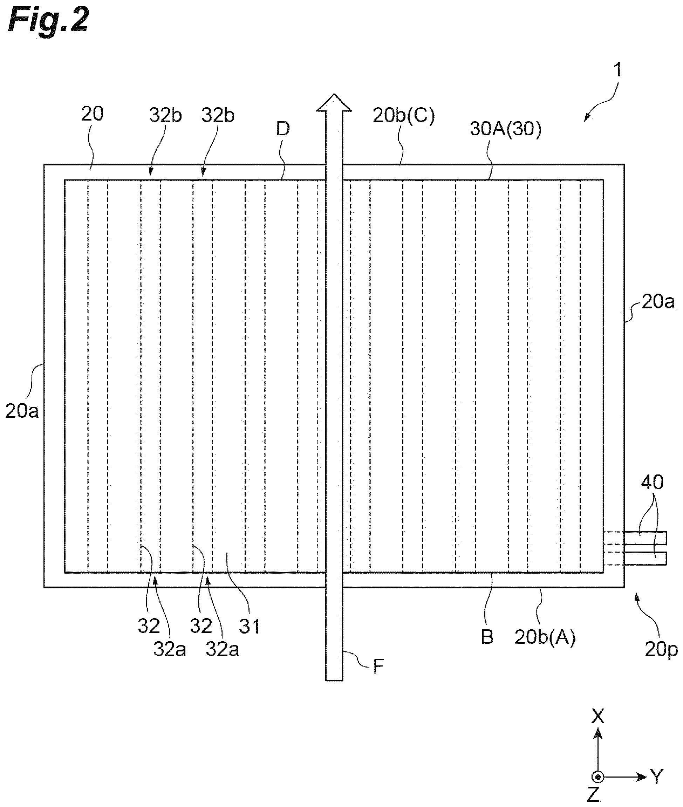

FIG. 2 is a schematic plan view of the power storage device illustrated in FIG. 1. As illustrated in FIGS. 1 and 2, the cooling member 30 is a member that is in contact with the electrode stacked body 10, includes a cooling flow passage 32 through which a cooling fluid (for example, air) is allowed to circulate from an inlet port 32a to an outlet port 32b in a direction F (here, the X-axis direction) intersecting the Z-axis direction, and cools down the electrode stacked body 10. The cooling member 30 includes a cooling member 30A that is disposed at one end of the electrode stacked body 10 in the Z-axis direction, and a cooling member 30B that is disposed at the other end of the electrode stacked body 10 in the Z-axis direction. The cooling member 30A is in contact with the current collector 15 of the negative termination electrode 12 and is electrically connected to the negative termination electrode 12. The cooling member 30B is in contact with the current collector 15 of the positive termination electrode 13 and is electrically connected to the positive termination electrode 13.

The cooling member 30 (the cooling member 30A or cooling member 30B) includes a main body portion 31, a plurality of cooling flow passages 32, and a detection line 33. For example, the main body portion 31 is formed from a metal, has conductivity, and has, for example, a rectangular plate shape. Each of the cooling flow passages 32 includes an inlet port 32a at one end on an upstream side of a direction F, and includes an outlet port 32b at the other end on a downstream side of the direction F. The cooling flow passage 32 is a through-hole formed in the main body portion 31. Here, the cooling flow passage 32 linearly extends along the X-axis direction, but may be curved. As an example, the plurality of cooling flow passages 32 are formed in parallel with each other at regular intervals. The detection line 33 is provided at one end of the main body portion 31, and is electrically connected to the main body portion 31.

As described above, the cooling member 30 has a configuration in which the cooling flow passage 32 is formed inside a conductive plate member (the main body portion 31), and is in contact with an outermost electrode (the negative termination electrode 12 or the positive termination electrode 13) of the electrode stacked body 10 in the Z-axis direction to be electrically connected thereto. According to this, for example, a cell state (for example, a voltage) of a power storage cell constituted by the negative termination electrode 12 and one of the bipolar electrodes 11 which is adjacent to the negative termination electrode 12 can be detected by using the detection line 33 of the cooling member 30A and a detection line 40 (details will be described later) adjacent to the detection line 33 in the Z-axis direction.

In addition, a cell state (for example, a voltage) of a power storage cell constituted by the positive termination electrode 13 and one of the bipolar electrodes 11 which is adjacent to the positive termination electrode 13 can be detected by using the detection line 33 of the cooling member 30B and a detection line 40 adjacent to the detection line 33 in the Z-axis direction. Accordingly, the detection line 33 can be used to detect the cell state such as the voltage of the power storage cell. Furthermore, when staking a plurality of the power storage devices 1 along the Z-axis direction, the cooling member 30 can also function as a conductive plate for electrically connecting the power storage devices 1. In this case, one piece of the cooling member 30 may be set to be common between the power storage devices 1 adjacent to each other.

Note that, the cooling member 30 has a function of transferring a restraint load to the electrode stacked body 10 when restraining the power storage device 1 in the Z-axis direction by using a predetermined restraint member. Accordingly, the cooling member 30 extends to overlap at least a central portion where the active material layer is formed in the current collector 15 when viewed from the Z-axis direction. Furthermore, in this embodiment, the cooling member 30 extends over a peripheral edge portion of the current collector 15 from the central portion of the current collector to overlap the sealing portion 20 when viewed from the Z-axis direction.

In this embodiment, with regard to the thickness of the electrode stacked body 10 in the Z-axis direction, the region where the active material layer is formed is thicker than a region where the sealing portion 20 is formed. Accordingly, mainly, the restraint load is applied to the active material layer of the electrode stacked body 10 from the cooling member 30. In the example in FIG. 1, when forming a region where the active material layer of the electrode stacked body 10 is formed, compression occurs in the Z-axis direction, and thus the cooling member 30 and the sealing portion 20 are in contact with each other. Note that, in this embodiment, when viewed from the Z-axis direction, an outer edge of the cooling member 30 is located on an inner side in comparison to an outer edge of the sealing portion 20, and an outer edge of the cooling member 30 is located on an outer side in comparison to an inner edge of the sealing portion 20. However, the size of the cooling member 30 is not limited thereto, and the outer edge of the cooling member 30 may match the outer edge of the sealing portion 20, or may be located on an outer side in comparison to the outer edge of the sealing portion 20.

The detection line 40 is provided in the electrode stacked body 10 and is led out from the sealing portion 20 to the outside of the electrode stacked body 10. More specifically, a part of the detection line 40 is embedded in the sealing portion 20, and the remaining portion is led out from the sealing portion 20 to the outside. The detection line 40 is joined (for example, welded) to the current collector 15 of the electrode stacked body 10 and is electrically connected thereto at a portion of the sealing portion 20 where the detection line 40 is embedded. As an example, the detection line 40 is provided with respect to the current collector 15 of all of the bipolar electrodes 11. According to this, it is possible to detect a cell state (for example, a voltage) of a power storage cell constituted by the bipolar electrodes 11 adjacent to each other by using a pair of the detection line 40 adjacent to each other in the Z-axis direction. In this manner, the detection line 40 is a voltage detection line as an example.

As described above, in this embodiment, a part of the detection line 40 is embedded in the sealing portion 20, and is joined to the current collector 15 that is embedded in the same sealing portion 20. Accordingly, in the sealing portion 20, a penetration portion is formed by the detection line 40 and the current collector 15. The current collector 15 and the detection line 40 are joined (for example, welded) to the sealing portion 20 at a portion of being embedded in the sealing portion 20. According to this, even in a leading-out portion 20p (penetration portion of the current collector 15 and the detection line 40) of the detection line 40 in the sealing portion 20, sealing of the accommodation space S is maintained.

As illustrated in FIG. 2, an external shape of the power storage device 1 when viewed from the Z-axis direction is defined by the sealing portion 20. That is, the sealing portion 20 includes a plurality of (here, two) outer side surfaces 20a and a plurality of (here, two) outer side surfaces 20b. An external shape of the sealing portion 20 shows a rectangular shape including a short side and a long side when viewed from the Z-axis direction. Each of the outer side surfaces 20a is a surface corresponding to the short side and each of the outer side surfaces 20b is a surface corresponding to the long side. When viewed from the Z-axis direction, the cooling flow passage 32 extends along the outer side surface 20a corresponding to the short side.

The detection line 40 is led out from the outer side surface 20a corresponding to the short side stated here to the outside of the sealing portion 20. That is, a leading-out portion 20p for the detection line 40 in the sealing portion 20 is provided in the outer side surface 20a. Particularly, the leading-out portion 20p is located to be closer to the inlet port 32a in relation to the outlet port 32b of the cooling flow passage 32 when viewed from the Z-axis direction. That is, the leading-out portion 20p is located at least on the inlet port 32a side in relation to a position between the inlet port 32a and the outlet port 32b of the cooling fluid in the cooling flow passage 32 (a half point of the entirety). Furthermore, as an example, the leading-out portion 20p may be disposed on the inlet port 32a side in relation to a position between a half point of the cooling flow passage 32 and the inlet port 32a (a quarter point of the entirety). Alternatively, the leading-out portion 20p may be located on the inlet port 32a side in relation to one third point of the entirety of the cooling flow passage 32.

As described above, the sealing portion 20 includes the plurality of outer side surfaces 20a and 20b extending along the Z-axis direction. The plurality of outer side surfaces 20a and 20b include a first outer side surface (one of the outer side surfaces 20b) on the inlet port 32a side, a second outer side surface (the other outer side surface 20b) on the outlet port 32b side, and a third outer side surface (the outer side surface 20a) extending between the first outer side surface and the second outer side surfaces to connect the first outer side surface and the second outer side surface. In addition, the leading-out portion 20p is provided in the third outer side surface and is located to be closer to the inlet port 32a side in relation to the outlet port 32b when viewed from the Z-axis direction.

Here, definition of the outer side surfaces will be specified. That is, when any outer side surface among the plurality of outer side surfaces 20a and 20b of the sealing portion 20 is described as being located on the inlet port 32a side (or on the outlet port 32b side), this represents that the outer side surface of the sealing portion 20 is an outer side surface facing the same side as in an outer surface from which the inlet port 32a is opened (or an outer surface from which the outlet port 32b is opened) among outer surfaces of the main body portion 31 of the cooling member 30 which extend along the Z-axis direction. As an example, in the example illustrated in FIG. 2, since one outer side surface A among the outer side surfaces 20b of the sealing portion 20 faces a negative side in the X-axis direction in a similar manner as in an outer surface B from which the inlet port 32a is opened in the main body portion 31 of the cooling member 30, the outer side surface A is an outer side surface on the inlet port 32a side. On the other hand, since the other outer side surface C between the outer side surface 20b of the sealing portion 20 faces a positive side in the X-axis direction in contrast to the outer surface B, the outer side surface C is not an outer side surface on the inlet port 32a side. That is, since the other outer side surface C between the outer side surfaces 20b of the sealing portion 20 faces the positive side in the X-axis direction in a similar manner as in an outer surface D from which the outlet port 32b is opened in the main body portion 31 of the cooling member 30, the outer side surface C is an outer side surface on the outlet port 32b side.

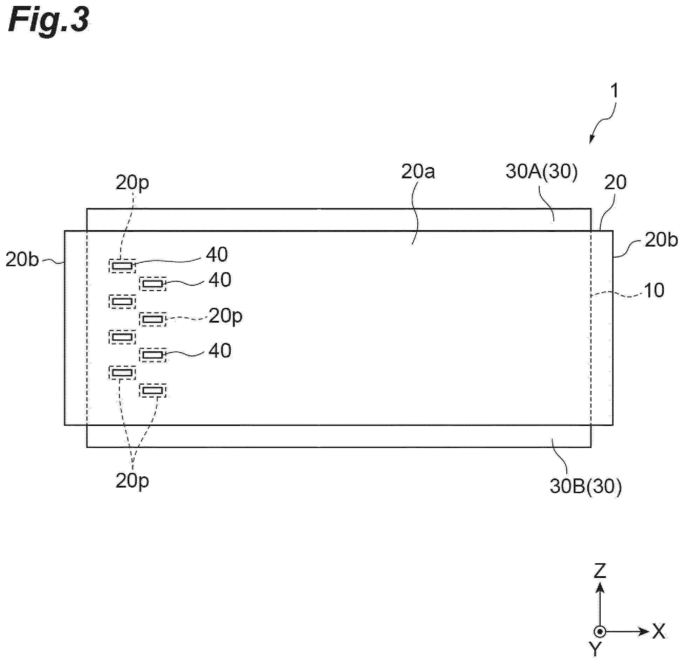

FIG. 3 is a schematic side view of the power storage device 1 illustrated in FIG. 1. As illustrated in FIG. 3, among the plurality of leading-out portions 20p, leading-out portions 20p adjacent to each other in the Z-axis direction are disposed at different positions in the X-axis direction intersecting the Z-axis direction and the Y-axis direction that is an extension direction of the detection line 40. In an example of FIG. 3, the plurality of leading-out portions 20p are alternately disposed along the Z-axis direction. Accordingly, approximately the half of the plurality of leading-out portions 20p are disposed at the same position in the X-axis direction. However, arrangement of the leading-out portions 20p is not limited thereto, and a position in the X-axis direction may be set to be different for every three leading-out portions 20p, or the position of all of the leading-out portions 20p in the X-axis direction may be set to be different.

As described above, in the power storage device 1, the sealing portion 20 that seals between electrodes adjacent to each other in the Z-axis directions is provided with respect to the electrode stacked body 10, and the sealing portion 20 is provided with the leading-out portions 20p through which the plurality of detection lines 40 are led out to the outside of the electrode stacked body 10. In addition, the power storage device 1 is provided with the cooling member 30 including the cooling flow passage 32 through which a cooling fluid is allowed to circulate in a direction intersecting the Z-axis direction. The leading-out portions 20p for the detection lines 40 in the sealing portion 20 are located to be closer to the inlet port 32a in relation to the outlet port 32b of the cooling fluid in the cooling flow passage 32. In the cooling flow passage 32, a temperature of the cooling fluid is lower on the inlet port 32a side and cooling efficiency is higher in comparison to the outlet port 32b side. Accordingly, even in a case where a temperature inside the electrode stacked body 10 rises due to a certain reason, a temperature of the leading-out portion 20p located to be close to the inlet port 32a of the cooling flow passage 32 is less likely to rise in comparison to other portions of the sealing portion 20. Accordingly, the sealing portion 20 is suppressed from being softened due to temperature rising of the sealing portion 20 in the leading-out portion 20p. In addition, even at the inside of the electrode stacked body 10, a temperature of an electrode at a portion closer to the inlet port 32a of the cooling flow passage 32 is maintained to be relatively lower in comparison to electrodes at other portions. Accordingly, at the inside of the electrode stacked body 10, a gas is less likely to be generated at a portion close to the inlet port 32a of the cooling flow passage 32, and thus a pressure is less likely to be applied to the sealing portion 20 at the leading-out portion 20p. Accordingly, at the leading-out portion 20p, cleavage of the sealing portion 20 is less likely to occur when an internal pressure rises, and lowering of reliability is suppressed.

In addition, in the power storage device 1, the sealing portion 20 includes the plurality of outer side surfaces 20a and 20b extending along the Z-axis direction, and the leading-out portions 20p is disposed of at least one outer side surface 20a among the plurality of outer side surfaces 20a and 20b. In addition, the leading-out portions 20p adjacent to each other in the Z-axis direction among a plurality of embedding portions are disposed at different positions in the X-axis direction. According to this, it is possible to avoid accumulation of the thickness of the detection lines 40 along the stacking direction.

In addition, in the power storage device 1, the cooling member 30 has a configuration in which the cooling flow passage 32 is formed inside a conductive plate member (the main body portion 31), and is in contact with an outermost electrode of the electrode stacked body 10 in the Z-axis direction to be electrically connected thereto. According to this, the cooling member 30 can be used as a conductive plate that can be used for electrical connection of a plurality of the power storage devices 1 or detection of a cell state such as a voltage of a power storage cell.

Furthermore, in the power storage device 1, the sealing portion 20 is provided at a peripheral edge portion of the current collector 15 when viewed from the Z-axis direction, and the cooling member 30 extends over the peripheral edge portion of the current collector 15 to overlap the sealing portion 20 when viewed from the Z-axis direction. According to this, the sealing portion 20 is cooled down and temperature rising is suppressed.

In the above-described embodiment, one aspect of the present disclosure is described. Accordingly, the power storage device according to the present disclosure can be modified without limitation to the above-described power storage device.

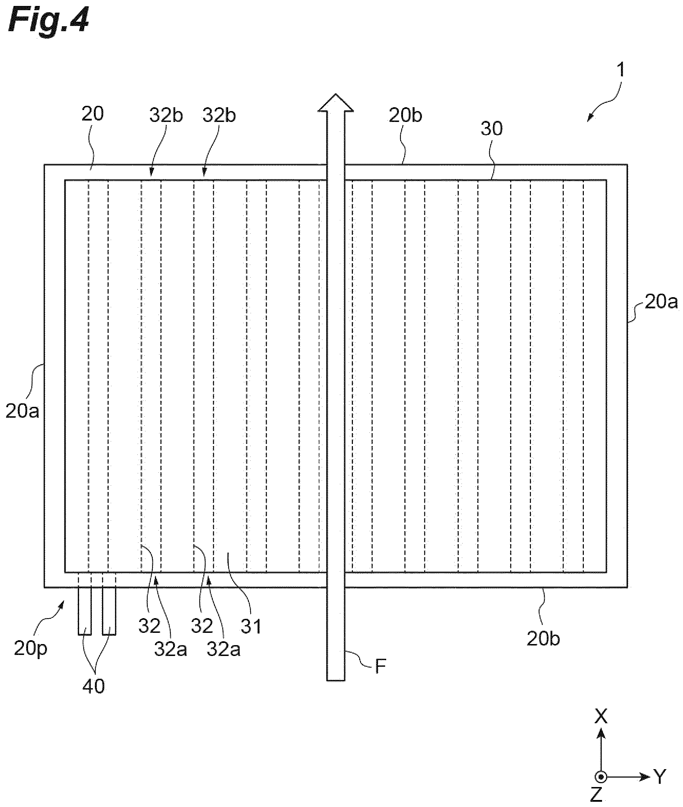

FIG. 4 is a schematic plan view illustrating a power storage device according to a modification example. As illustrated in FIG. 4, in the power storage device 1, the leading-out portions 20p of the sealing portion 20 may be provided with respect to the outer side surface 20b located on the inlet port 32a side of the cooling flow passage 32 between a pair of the outer side surfaces 20b corresponding to the long sides of the sealing portion 20 when viewed from the Z-axis direction. That is, the detection lines 40 may be led out from the outer side surface 20b.

That is, the sealing portion 20 includes a plurality of outer side surfaces 20a and 20b extending along the Z-axis direction, and the plurality of outer side surfaces 20a and 20b include a first outer side surface (one of the outer side surfaces 20b) on the inlet port 32a side, and a second outer side surface (the other outer side surface 20b) on the outlet port 32b side as an outer side surface different from the first outer side surface. In addition, the leading-out portions 20p are provided in the first outer side surface. As a result, the leading-out portion 20p is located to be closer to the inlet port 32a in relation to the outlet port 32b when viewed from the Z-axis direction.

In this case, the leading-out portions 20p are disposed at a site where a temperature of the cooling fluid is relatively low, and are more likely to be cooled down. Furthermore, the leading-out portions 20p may be disposed to be dispersed to the plurality of outer side surfaces 20a and 20b within a range closer to the inlet port 32a in relation to the outlet port 32b of the cooling flow passage 32. Furthermore, in the cooling member 30, the cooling flow passage 32 may extend along the long sides of the sealing portion 20.

In addition, in the above-described embodiment, the cooling member 30 extends over the peripheral edge portion of the current collector 15 from the central portion of the current collector 15 to overlap the sealing portion 20. However, the cooling member 30 may be provided at the central portion of the current collector 15 so as to overlap the active material layer and so as not to reach the sealing portion 20 when viewed from the Z-axis direction. In this case, when viewed from the Z-axis direction, an outer edge of the cooling member 30 is located on an inner side than an inner edge of the sealing portion 20. In this case, the cooling member 30 can transfer the restraint load of the electrode stacked body 10 without coming into contact with the sealing portion 20.

In addition, in the above-described embodiment, the cooling member 30 is in contact with the outermost electrode of the electrode stacked body 10 in the Z-axis direction to be electrically connected thereto. However, the cooling member 30 may not be electrically connected to the electrode stacked body 10. For example, the cooling member 30 may include an insulating member interposed between the cooling member 30 and the electrode stacked body 10, and may be in contact with the electrode stacked body 10 through the insulating member.

In addition, in the above-described embodiment, a part of the detection line 40 is embedded in the sealing portion 20, and the remaining portion is led out from the sealing portion 20 to the outside. However, the detection line 40 may penetrate through the sealing portion 20. In this case, the detection line 40 includes a part embedded in the sealing portion 20, another part led out from the part to the outside of the sealing portion 20, and still another part led to the inside of the sealing portion 20 (the accommodation space S) from the part. Furthermore, the detection line 40 may be configured separately from the current collector 15, and a part of the current collector 15 may extend without limitation to a case of being joined to the current collector 15. In addition, the detection line 40 is not limited to the voltage detection line, and may be, for example, a temperature detection line connected to a temperature sensor provided in the electrode stacked body 10.

Furthermore, in the above-described embodiment, description has been given of an example in which the leading-out portions 20p adjacent to each other in the Z-axis direction among the plurality of leading-out portions 20p are disposed at different positions in the X-axis direction. However, in a case where the thickness of the detection line 40 does not have an influence on the leading-out portions 20p, the positions of the leading-out portions 20p in the X-axis direction may not be different from each other (may be disposed in a line in the Z-axis direction).

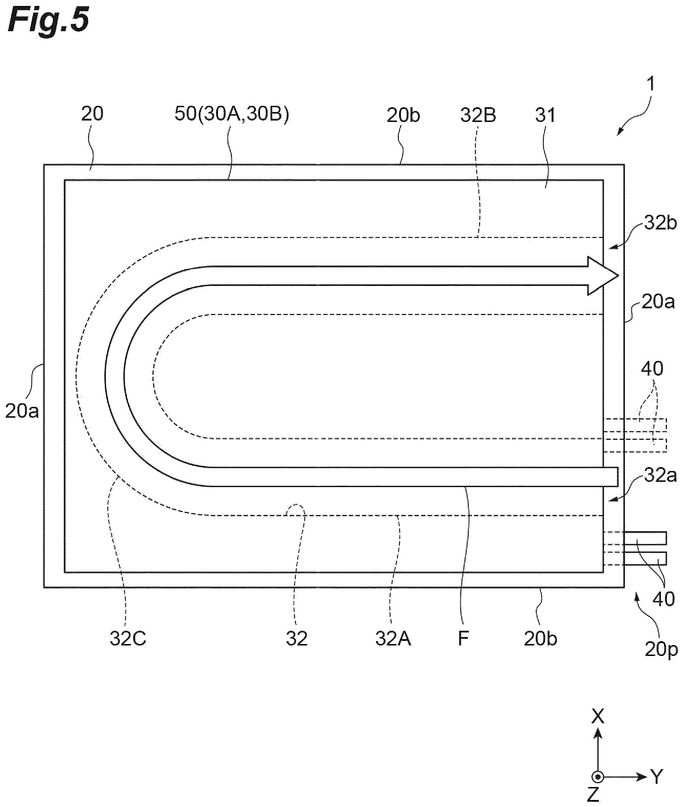

Here, FIG. 5 is a schematic plan view illustrating a power storage device according to a modification example. As illustrated in FIG. 5, a power storage device 1 can be provided with a cooling member 50 instead of the cooling member 30. In this case, the power storage device 1 can be provided with a cooling member 50 corresponding to the cooling member 30A and a cooling member 50 corresponding to the cooling member 30B. However, only one of the cooling member 30A and the cooling member 30B may be set as the cooling member 50. As in the cooling member 30, the cooling member 50 is a member that is in contact with the electrode stacked body 10, includes a cooling flow passage 32 through which a cooling fluid (for example, air) is allowed to circulate from an inlet port 32a to an outlet port 32b in a direction F (here, a direction along an X-Y plane) intersecting the Z-axis direction, and cools down the electrode stacked body 10.

The cooling member 50 includes the main body portion 31, a cooling flow passage 32, and a detection line 33 (not illustrated in the drawing). The cooling flow passage 32 includes the inlet port 32a at one end on an upstream side in the direction F and an outlet port 32b at the other end on a downstream side in the direction F. Here, the cooling flow passage 32 extends in a partially curved manner along the X-Y plane. More specifically, the cooling flow passage 32 includes a first portion 32A that linearly extends from the inlet port 32a along the Y-axis direction, a second portion 32B that linearly extends toward the outlet port 32b along the Y-axis direction, and a third portion 32C that extends in a state of being curved in an arc shape and connects the first portion 32A and the second portion 32B. The first portion 32A and the second portion 32B extend in approximately parallel with each other.

According to this, the inlet port 32a and the outlet port 32b are disposed on the same side of the main body portion 31. In this example, the inlet port 32a and the outlet port 32b may be disposed in combination on an outer side surface 20a side where a leading-out portion 20p for the detection line 40 is provided in the sealing portion 20.

That is, the inlet port 32a and the outlet port 32b are disposed on the same side of the cooling member 30. The sealing portion 20 includes a plurality of outer side surfaces 20a and 20b extending along the Z-axis direction, and the plurality of outer side surfaces 20a and 20b include a first outer side surface (one of the outer side surfaces 20a) on the inlet port 32a and outlet port 32b side. In addition, the leading-out portion 20p is provided in the first outer side surface, and is located to be closer to the inlet port 32a in relation to the outlet port 32b when viewed from the Z-axis direction.

However, the inlet port 32a and the outlet port 32b may be disposed on the outer side surface 20b side. At this time, the leading-out portion 20p for the detection line 40 may be provided in the outer side surface 20b.

Even in this example, the leading-out portion 20p for the detection line 40 is located to be closer to the inlet port 32a in relation to the outlet port 32b when viewed from the Z-axis direction. In an example indicated by a solid-line in FIG. 5, the leading-out portion 20p is disposed at a position closer to an end on a side opposite to the outlet port 32b in the outer side surface 20a in comparison to the inlet port 32a. However, the leading-out portion 20p may be disposed at a position closer to the inlet port 32a in relation to the outlet port 32b between the inlet port 32a and the outlet port 32b when viewed from the Z-axis direction. Furthermore, the leading-out portion 20p may be disposed to at least partially overlap the inlet port 32a (positions in the X-axis direction overlap each other) when viewed from the Z-axis direction.

As described above, even in a case of using the cooling member 50, a similar effect as in a case of using the cooling member 30 can be exhibited. Particularly, when using the cooling member 50, since the inlet port 32a and the outlet port 32b of the cooling flow passage 32 are disposed on the same side of the main body portion 31, mechanisms relating to introduction and discharge of the cooling fluid to and from the cooling flow passage 32 are disposed on one side of the power storage device 1 and simplification can be accomplished.

### Industrial Applicability

A power storage device capable of suppressing lowering of reliability is provided.

### Reference Signs List

1: power storage device, 10: electrode stacked body (stacked body), 15: current collector, 16: positive electrode active material layer (active material layer), 17: negative electrode active material layer, 20: sealing portion, 20a, 20b: outer side surface, 20p: leading-out portion, 30, 50: cooling member, 31: main body portion, 32: cooling flow passage, 40: detection line.

## Claims

1. A power storage device, comprising:
a stacked body constituted by stacking a plurality of electrodes including a current collector and an active material layer provided on the current collector;
a sealing portion surrounding the stacked body and configured to seal between the electrodes adjacent in a stacking direction of the stacked body;
a plurality of detection lines connected to the electrodes and led out from the sealing portion to the outside; and
a cooling member contacting with the stacked body and including a cooling flow passage through which a cooling fluid is allowed to circulate from an inlet port to an outlet port in a direction intersecting the stacking direction,
wherein the sealing portion includes a leading-out portion through which each of the plurality of detection lines is led out, and
the leading-out portion is located to be closer to the inlet port in relation to the outlet port of the cooling flow passage when viewed from the stacking direction.

2. The power storage device according to claim 1,
wherein the sealing portion includes a plurality of outer side surfaces extending along the stacking direction,
the plurality of outer side surfaces include,
a first outer side surface on the inlet port side,
a second outer side surface on the outlet port side as an outer side surface different from the first outer side surface, and
a third outer side surface extends between the first outer side surface and the second outer side surface, and
the leading-out portion is provided in the third outer side surface and is located to be closer to the inlet port in relation to the outlet port when viewed from the stacking direction.

3. The power storage device according to claim 1,
wherein the sealing portion includes a plurality of outer side surfaces extending along the stacking direction,
the plurality of outer side surfaces include,
a first outer side surface on the inlet port side, and
a second outer side surface on the outlet port side as an outer side surface different from the first outer side surface, and
the leading-out portion is provided in the first outer side surface.

4. The power storage device according to claim 1,
wherein the inlet port and the outlet port are disposed on the same side of the cooling member,
the sealing portion includes a plurality of outer side surfaces extending along the stacking direction,
the plurality of outer side surfaces include a first outer side surface on the side of the inlet port and the outlet port, and
the leading-out portion is provided in the first outer side surface, and is located to be closer to the inlet port in relation to the outlet port when viewed from the stacking direction.

5. The power storage device according to claim 1,
wherein the sealing portion includes a plurality of outer side surfaces extending along the stacking direction,
the leading-out portion is disposed in at least one outer side surface among the plurality of outer side surfaces, and
leading-out portions adjacent in the stacking direction among a plurality of the leading-out portions are located at different positions in a direction intersecting the stacking direction and an extending direction of the detection lines.

6. The power storage device according to any one of claims 1 to 5,
wherein the cooling member has a configuration in which the cooling flow passage is formed inside a conductive plate member, and comes into contact with the outermost electrode in the stacking direction of the stacked body to be electrically connected to the outermost electrode.

7. The power storage device according to any one of claims 1 to 5,
wherein the sealing portion is provided in a peripheral edge portion of the current collector when viewed from the stacking direction, and
the cooling member extends over the peripheral edge portion of the current collector to overlap the sealing portion when viewed from the stacking direction.

8. The power storage device according to claim 6,
wherein the sealing portion is provided in a peripheral edge portion of the current collector when viewed from the stacking direction, and
the cooling member extends over the peripheral edge portion of the current collector to overlap the sealing portion when viewed from the stacking direction.

## Patentansprüche

1. Leistungsspeichervorrichtung, die aufweist:
einen Stapelkörper, der durch Stapeln einer Vielzahl Elektroden gebildet ist, die einen Stromabnehmer und eine Aktivmaterialschicht umfassen, die an dem Stromabnehmer vorgesehen ist;
einen Dichtabschnitt, der den Stapelkörper umgibt und dazu gestaltet ist, zwischen den Elektroden zu dichten, die in einer Stapelrichtung des Stapelkörpers benachbart sind;
eine Vielzahl Erfassungsleitungen, die mit den Elektroden verbunden sind und von dem Dichtabschnitt zu der Außenseite herausgeführt sind; und
ein Kühlelement, das mit dem Stapelkörper in Berührung ist und einen Kühlströmungsdurchlass umfasst, durch den es einem Kühlfluid ermöglicht ist, von einem Einlassanschluss zu einem Auslassanschluss zu zirkulieren, in einer Richtung die die Stapelrichtung schneidet,
wobei der Dichtabschnitt einen Herausführabschnitt umfasst, durch den jede der Vielzahl Erfassungsleitungen herausgeführt ist, und
der Herausführabschnitt so liegt, dass er näher bei dem Einlassanschluss ist, bezüglich des Auslassanschlusses, des Kühlströmungsdurchlasses, von der Stapelrichtung betrachtet.

2. Leistungsspeichervorrichtung gemäß Anspruch 1,
wobei der Dichtabschnitt eine Vielzahl Außenseitenflächen umfasst, die sich entlang der Stapelrichtung erstrecken,
die Vielzahl Außenseitenflächen umfassen:
eine erste Außenseitenfläche an der Einlassanschlussseite;
eine zweite Außenseitenfläche an der Auslassanschlussseite als eine Außenseitenfläche, die von der ersten Außenseitenfläche verschieden ist; und
eine dritte Außenseitenfläche, die sich zwischen der ersten Außenseitenfläche und der zweiten Außenseitenfläche erstreckt, und
der Herausführabschnitt in der dritten Außenseitenfläche vorgesehen ist und so liegt, dass er näher bei dem Einlassanschluss ist, bezüglich des Auslassanschlusses, von der Stapelrichtung betrachtet.

3. Leistungsspeichervorrichtung gemäß Anspruch 1,
wobei der Dichtabschnitt eine Vielzahl Außenseitenflächen umfasst, die sich entlang der Stapelrichtung erstrecken,
die Vielzahl Außenseitenflächen umfassen:
eine erste Außenseitenfläche an der Einlassanschlussseite; und
eine zweite Außenseitenfläche an der Auslassanschlussseite als eine Außenseitenfläche, die von der ersten Außenseitenfläche verschieden ist, und
der Herausführabschnitt in der ersten Außenseitenfläche vorgesehen ist.

4. Leistungsspeichervorrichtung gemäß Anspruch 1,
wobei der Einlassanschluss und der Auslassanschluss an derselben Seite des Kühlelements angeordnet sind,
der Dichtabschnitt eine Vielzahl Außenseitenflächen umfasst, die sich entlang der Stapelrichtung erstrecken,
die Vielzahl Außenseitenflächen eine erste Außenseitenfläche an der Seite des Einlassanschlusses und des Auslassanschlusses umfassen, und
der Herausführabschnitt in der ersten Außenseitenfläche vorgesehen ist und so liegt, dass er näher bei dem Einlassanschluss ist, bezüglich des Auslassanschlusses, von der Stapelrichtung betrachtet.

5. Leistungsspeichervorrichtung gemäß Anspruch 1,
wobei der Dichtabschnitt eine Vielzahl Außenseitenflächen umfasst, die sich entlang der Stapelrichtung erstrecken,
der Herausführabschnitt in mindestens einer Außenseitenfläche aus der Vielzahl Außenseitenflächen angeordnet ist, und
Herausführabschnitte, die in der Stapelrichtung benachbart sind, aus einer Vielzahl der Herausführabschnitte, an verschiedenen Positionen in einer Richtung liegen, die die Stapelrichtung und eine Erstreckungsrichtung der Erfassungsleitungen schneidet.

6. Leistungsspeichervorrichtung gemäß einem der Ansprüche 1 bis 5,
wobei das Kühlelement eine Gestaltung hat, bei der der Kühlströmungsdurchlass innerhalb eines Leitungsplattenelements ausgebildet ist, und in Berührung mit der äußersten Elektrode in der Stapelrichtung des Stapelkörpers kommt, zum elektrischen Verbunden-Sein mit der äußersten Elektrode.

7. Leistungsspeichervorrichtung gemäß einem der Ansprüche 1 bis 5,
wobei der Dichtabschnitt in einem Umfangskantenabschnitt des Stromabnehmers vorgesehen ist, von der Stapelrichtung betrachtet, und
das Kühlelement sich über den Umfangskantenabschnitt des Stromabnehmers zum Überlappen des Dichtabschnitts erstreckt, von der Stapelrichtung betrachtet.

8. Leistungsspeichervorrichtung gemäß Anspruch 6,
wobei der Dichtabschnitt in einem Umfangskantenabschnitt des Stromabnehmers vorgesehen ist, von der Stapelrichtung betrachtet, und
das Kühlelement sich über den Umfangskantenabschnitt des Stromabnehmers zum Überlappen des Dichtabschnitts erstreckt, von der Stapelrichtung betrachtet.

## Revendications

1. Dispositif de stockage d'énergie comprenant :
un corps empilé constitué par un empilement d'une pluralité d'électrodes incluant un collecteur de courant et une couche de matière active pourvue sur le collecteur de courant ;
une partie d'étanchéité entourant le corps empilé et configurée pour assurer l'étanchéité entre les électrodes adjacentes suivant une direction d'empilement du corps empilé ;
une pluralité de lignes de détection connectées aux électrodes et débouchant vers l'extérieur depuis la partie d'étanchéité ; et
un élément de refroidissement en contact avec le corps empilé et comportant un passage de flux de refroidissement à travers lequel un fluide de refroidissement peut circuler d'un orifice d'entrée à un orifice de sortie dans une direction coupant la direction d'empilement,
où la partie d'étanchéité comporte une partie de sortie à travers laquelle débouche chacune de la pluralité de lignes de détection, et
la partie de sortie est située de manière à être plus proche de l'orifice d'entrée par rapport à l'orifice de sortie du passage de flux de refroidissement lorsque l'on regarde dans la direction de l'empilement.

2. Dispositif de stockage d'énergie selon la revendication 1,
dans lequel la partie d'étanchéité comprend une pluralité de surfaces latérales externes s'étendant le long de la direction d'empilement,
la pluralité de surfaces latérales externes comprend,
une première surface latérale externe du côté de l'orifice d'entrée,
une deuxième surface latérale externe du côté de l'orifice de sortie en tant que surface latérale externe différente de la première surface latérale externe, et
une troisième surface latérale externe entre la première surface latérale externe et la deuxième surface latérale externe, et
la partie de sortie est pourvue au niveau de la troisième surface latérale externe et est située de manière à être plus proche de l'orifice d'entrée par rapport à l'orifice de sortie lorsque l'on regarde dans la direction de l'empilement.

3. Dispositif de stockage d'énergie selon la revendication 1,
dans lequel la partie d'étanchéité comprend une pluralité de surfaces latérales externes s'étendant le long de la direction d'empilement,
la pluralité de surfaces latérales externes comprend,
une première surface latérale externe du côté de l'orifice d'entrée, et
une deuxième surface latérale externe du côté de l'orifice de sortie en tant que surface latérale externe différente de la première surface latérale externe, et
la partie de sortie est pourvue au niveau de la première surface latérale externe.

4. Dispositif de stockage d'énergie selon la revendication 1,
dans lequel l'orifice d'entrée et l'orifice de sortie sont disposés du même côté de l'élément de refroidissement,
la partie d'étanchéité comprend une pluralité de surfaces latérales externes s'étendant le long de la direction d'empilement,
la pluralité de surfaces latérales externes comprend une première surface latérale externe sur le côté de l'orifice d'entrée et de l'orifice de sortie, et
la partie de sortie est pourvue au niveau de la première surface latérale externe et est située de manière à être plus proche de l'orifice d'entrée par rapport à l'orifice de sortie lorsque l'on regarde dans la direction de l'empilement.

5. Dispositif de stockage d'énergie selon la revendication 1,
dans lequel la partie d'étanchéité comprend une pluralité de surfaces latérales externes s'étendant le long de la direction d'empilement,
la partie de sortie est disposée au niveau d'au moins une surface latérale externe parmi la pluralité de surfaces latérales externes, et
les parties de sortie adjacentes dans la direction d'empilement parmi une pluralité de parties de sortie sont situées à des positions différentes dans une direction coupant la direction d'empilement et une direction d'extension des lignes de détection.

6. Dispositif de stockage d'énergie selon l'une quelconque des revendications 1 à 5,
dans lequel l'élément de refroidissement a une configuration dans laquelle le passage de flux de refroidissement est formé à l'intérieur d'un élément de plaque conductrice, et vient en contact avec l'électrode la plus externe dans la direction d'empilement du corps empilé pour être connecté électriquement à l'électrode la plus externe.

7. Dispositif de stockage d'énergie selon l'une quelconque des revendications 1 à 5,
dans lequel la partie d'étanchéité est pourvue dans une partie de bord périphérique du collecteur de courant lorsque l'on regarde dans la direction de l'empilement, et
l'élément de refroidissement s'étend sur la partie de bord périphérique du collecteur de courant pour chevaucher la partie d'étanchéité lorsque l'on regarde dans la direction de l'empilement.

8. Dispositif de stockage d'énergie selon la revendication 6,
dans lequel la partie d'étanchéité est pourvue dans une partie de bord périphérique du collecteur de courant lorsque l'on regarde dans la direction de l'empilement, et
l'élément de refroidissement s'étend sur la partie de bord périphérique du collecteur de courant pour chevaucher la partie d'étanchéité lorsque l'on regarde dans la direction de l'empilement.
